# EUROPEAN PATENT APPLICATION

(11) **EP 2 109 204 A1**
(43) Date of publication of application: **14.10.2009**
(21) Application number: 08154381.1
(22) Date of filing: 11.04.2008
(51) Int. Cl.: H02J 13/00, G01R 31/327

(54) **Analysis of a substation automation system**

(71) Applicant: ABB Technology AG, 8050 Zürich (CH)
(72) Inventor: Obrist, Michael, CH-5400, Baden (CH); Hakala-Ranta, Antti, FI-65230, Vaasa (FI); Maeda, Tetsuji, CH-6340, Baar (CH)
(74) Representative: ABB Patent Attorneys

(57) **Abstract**

The present invention is concerned with an analysis of a Substation Automation (SA) system comprising an Intelligent Electronic Device (IED) and an SA communication network. An analyser is connected to the communication network and captures messages transmitted by the IED, the messages including a first and a second value (Y1, Y2, Y3) of a particular process quantity (Y), respectively. The captured values arc displayed in a time resolved graphical manner on a screen, and , in case the first and the second value (Y1,Y2, Y3) differ, a discontinuity indicator (Z) graphically marking a change in the value of the process quantity (Y) is likewise depicted. In a preferred variant, configuration information according to the standard IEC 61850 is provided for the SA system and the IED, and based there upon, enhanced information about the process quantities (Y) is extracted from the process data of the intercepted messages.

## Description

### FIELD OF THE INVENTION

The invention relates to the field of Substation Automation systems with a standardized configuration representation. It departs from a method of analysing a Substation Automation system as described in the preamble of claim 1.

### BACKGROUND OF THE INVENTION

Substations for power distribution in high and medium voltage power networks include primary or field devices such as electrical cables, lines, bus bars, switches, breakers, power transformers and instrument transformers arranged in switch yards and/or bays. These primary devices are operated in an automated way via a Substation Automation (SA) system responsible for controlling, protecting and monitoring of substations. The SA system comprises programmable secondary devices, so-called Intelligent Electronic Devices (IED), interconnected in a SA communication network, and interacting with the primary devices via a process interface.

Today's SA systems require interoperability between all substation devices independent of the manufacturer. Therefore, an internationally accepted communication standard for communication between the IEDs of a substation has been introduced. The IEC standard 61850 "communication networks and systems in substations" decouples the substation-specific application functionality from the substation communication-specific issues and to this end, defines an abstract object model for compliant substations, and a method how to access these objects over a network via an Abstract Communication Service Interface (ACSI). This allows the substation-specific applications such as the Operator Work Station (OWS) to operate with standard objects, while the actual IED-specific objects in the substation may be realized differently by the manufacturers of the IEDs. An abstract data model according to the standard incorporates SA functionality in terms of logical nodes grouped into logical devices and allocated to the IEDs as the physical devices. The communication-specific issues are handled via an ISO/OSI communication stack presently comprising a stack with MMS/TCP/IP/Ethernet and an optical, wireless or other media-type physical layer. While the data model including attributes like time stamps or validity indications is realized by the application layer of the communication stack, messages for time-critical or safety-related communication, i.e. the Generic Object Oriented Substation Events (GOOSE) such as trips and blockings, as well as for analogue Sampled Values (SV), are mapped directly to the Ethernet link layer of the communication stack.

One impact of the aforementioned interoperability requirement is that devices from different suppliers have to be combined into one SA system by the system integrator, and engineering data has to be exchanged between dedicated engineering or SA configuration tools of different suppliers during the commissioning process. Therefore, the complete system with its entire devices and communication links has to be described in a formal way in the engineering process. This is enabled by the comprehensive XML-based Substation Configuration description Language (SCL) for IEC 61850 compliant systems that is part of the standard.

The SCL language is used to describe the capabilities of a particular IED or IED type in an IED Capability Description (ICD). It enumerates the communication and application functionality of the physical device as delimited e.g. by the number of I/O ports. A Substation Configuration Description (SCD) file in SCL language describes a model of a particular substation, the IED functions in terms of logical nodes, and the communication connections. The SCD file comprises (1) a switch yard naming and topology description, (2) IED configuration description (functions in terms of logical nodes), (3) Relation between switch yard and IED functions, (4) communication network description. Accordingly, if a particular IED is used within an SA system, then based on its ICD type description an object instance of the IED is inserted into the corresponding SCD file. The SCL language then allows specifying typical or individual values for data attributes carried by the instance and related to the particular IED, e.g. values for configuration attributes and setting parameters. The connection between the power process and the SA system is described in the SCL language by attaching logical nodes to elements of the primary equipment. Typically, a switch control logical node is attached to a switching device, whereas a measurement logical node or a protection function logical node is allocated to a bay unit.

In a substation engineering process, the SA configuration (topology, IED configuration and communication setup) is derived from the customer requirements and stored in an SCD file. For the actual installation or commissioning, all or parts of the configuration information previously engineered needs to be transferred to the physical devices, and the IEDs themselves need to be configured properly. For various reasons, inconsistencies between the SCD file and the actual configuration of an individual IED may arise. Such inconsistencies should be identified and remedied by a test and commissioning engineer during or after a commissioning of an SA system. Likewise, successful verification of the expected behaviour of an individual IED of the SA system or of certain aspects of the SA system related to its distributed application logic and the detailed interplay of a plurality of IEDs, either prior to or during operation of the SA system, contributes to an increased level of confidence in the latter.

The patent application EP-A 1 850 447 describes a Substation Automation testing tool which combines the information found in the SCL (Substation Configuration Language) File of a substation (Substation Configuration Description) or an IED (IED Capability description) with substation-relevant data extracted from the Substation Communication network traffic. By means of a standard laptop computer as a message interceptor connected to a substation communication network, IEC 61850 relevant data is retrieved and analysed, allowing for consistency verification without revision handling and achieving a reduction of the time and efforts for commissioning or testing a substation installation.

### DESCRIPTION OF THE INVENTION

It is an objective of the invention to facilitate and expedite an analysis or testing of a Substation Automation system. This objective is achieved by a method of analysing a Substation Automation system and an SA system analyser according to the claims 1 and 7. Further preferred embodiments are evident from the dependent patent claims.

According to the invention, a Substation Automation (SA) system for a substation of an electric power transmission or distribution system comprises Intelligent Electronic Devices (IED) interconnected by a SA communication network and repeatedly exchanging network messages. The SA system, or an individual component thereof, is analysed or tested by capturing or intercepting network messages and extracting there from values of a particular process quantity of the substation, such as a switch position or a bus voltage, or of the SA system, such as a trip signal or a quality status indication. These successive values are displayed to a user in a chronological order as a function of a time-stamp associated to each value in a graphical manner, i.e. not entirely in alphanumerical form. In addition, a discontinuity indicator is likewise displayed in a suitable graphical form in case two successive values of the process quantity differ, thus marking, highlighting or emphasizing this fact to the user. The graphical representation of the time resolved process data and of the changes in the respective values simplifies a comparison among process quantities as well as an analysis of a temporal relation between their respective changes. It supports a user such as a testing or commissioning engineer in identifying and analysing problems more rapidly and thus contributes to a reduction of the time and effort for commissioning or testing an SA system.

The intercepted network traffic may include process quantities of any type such as Boolean type used for trip signals, Integer type enumerating a few discrete integer values for switch positions, and Integer or Floating Point numbers used for RMS measurements.

The discontinuity indicator may be a change in the graphical representation of the values, e.g. their dot size or colour, or it may comprise an additional marker such as an arrow pointing to the dot or icon representing the changed value. The discontinuity indicator may include a suitable interpolation between successive values, such as a line with a discontinuous or abrupt change in its representation, e.g. its line thickness or colour, and/or exhibiting a kink or step change at a particular point in time comprised in the interval defined by the two time-stamps associated to previous and the changed value of the process quantity, respectively. Depicting a discontinuity indicator may also be triggered by missing or substantially delayed cyclically transmitted telegrams.

In a preferred variant of the invention, the SA system is compliant with the standard IEC 61850, meaning that standardized configuration descriptions of the SA system or of individual IEDs are available and that the network messages are standardized Ethernet frames with IEC 61850 conforming telegrams. The configuration information about the SA system and about the IEDs is contained respectively in a standardized Substation Configuration Description (SCD) or an IED Capability Description (ICD), or may be obtained from the IEDs via MMS Services. The standardized configuration description allows extracting substation-specific process data from the frames and decoding enhanced information, such as a relevant context, semantic meaning or quality indication, on behalf of a process quantity. In particular, numerical values of process quantities are enhanced with identifying information about the process quantity (type, ID, quality, etc.) by analysing IEC 61850 compliant frames such as MMS (Manufacturing Message Specification), GOOSE (Generic Object Oriented Substation Events) or SV (analogue Sampled Values). Hence, reverting to the standard IEC 61850 simplifies an interpretation of exchanged process data in communication networks of Substation Automation systems.

In an advantageous embodiment, the values of two or more distinct process quantities originating from one or several IEDs are displayed with respect to a common or shared time axis, facilitating comparison across the distinct process quantities and revealing the time relations of the their respective changes. For instance, signals from two different IEDs may be displayed. If a first IED cyclically transmits a binary trip status, the time delay between the first (off-cycle) message comprising a trip command and a response message from a second IED indicating that a circuit breaker has opened can be determined. Furthermore, the second process quantity may also be a process signal with a quasicontinuous range of (measurement) values, the graphical display thus resembling a kind of digital oscilloscope. Such a set-up depicting the above trip status together with corresponding Sampled Values represents a simple type of disturbance recording.

A combination of the above preferred variant and advantageous embodiment enables a user to select the process quantities to be displayed concurrently independently of the originating IEDs or an internal structure of the telegrams comprising the process data. Instead, related process quantities can be identified according to their functional context, i.e. the enhanced semantic or contextual information about the substation as derived from the standardized configuration description of the latter. Hence, on the graphical display, related process quantities can be grouped and designated accordingly.

In a distinct advantageous embodiment, the process data from frames that were saved into a specific file or buffer in a previous session may be displayed. Alternatively, in an online mode, process data captured from the network is displayed instantaneously. The content of the display is updated spontaneously in on line mode, e.g. the time axis is adapted and interconnecting lines are redrawn in order to connect to the dot or icon representing the latest value added. The associated time-stamps may either relate to the time when the process data was received by an analyser, or may be taken from the header of the received frame.

The present invention also relates to a computer program product including computer program code means for controlling one or more processors of an SA system analyser connected to an SA communication network and configured to store substation configuration data.

### BRIEF DESCRIPTION OF THE DRAWINGS

The subject matter of the invention will be explained in more detail in the following text with reference to preferred exemplary embodiments which are illustrated in the attached drawings, in which:
- Fig.1: shows an excerpt of a single line diagram of a substation,
- Fig.2: shows enhanced information generated for display to an end-user,
- Fig.3: depicts a number of successive values of two distinct process quantities, and
- Fig.4: depicts the evolution of three distinct process quantities over time.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

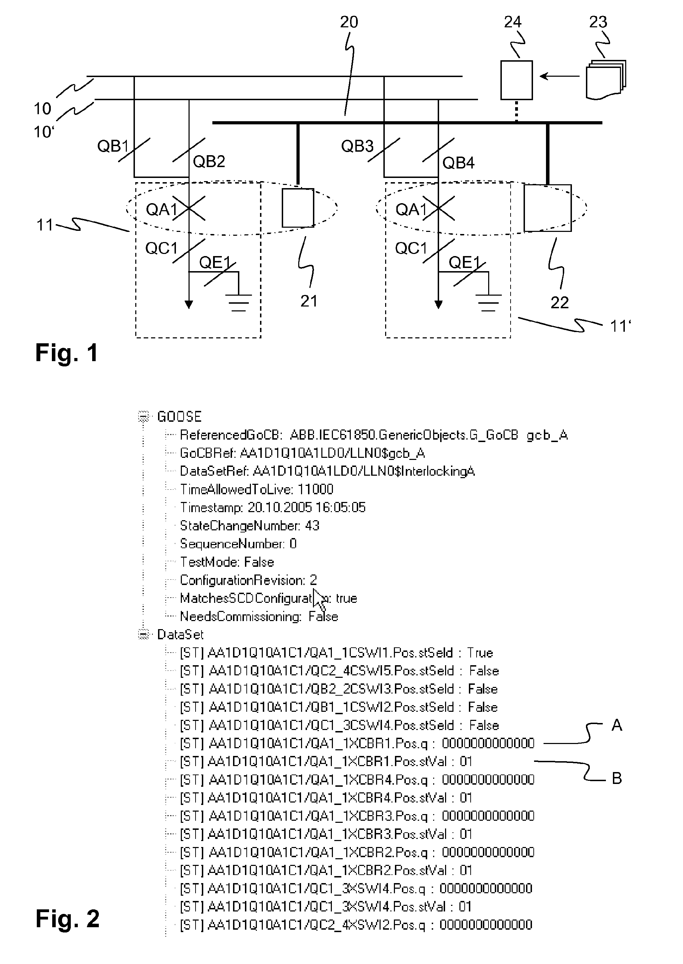

Fig.1 shows a single line diagram of a part or section of an exemplary substation at an assumed voltage level of e.g. 110 kV, together with some communication links and Substation Automation (SA) or secondary equipment. The model of a switch yard at single line level contains the topological respectively electrical connections between primary equipment. The substation comprises a double bus bar configuration with two bus bars 10, 10', each of them feeding two bays 11, 11' via disconnectors QB1 to QB4. Each bay comprises a circuit breaker QA1, a disconnector QC1 and an earthing switch QE1. The corresponding excerpt of the SA system depicts, in bold lines, a communication network 20 connected to two IEDs 21, 22, which both host logical nodes of class CSWI (switch control). Each logical node is allocated to one of the aforementioned circuit breakers QA1 as indicated by the dash-dot lines. Substation specific SCL files 23 comprise a Substation Configuration Description (SCD) of the substation including IEDs 21, 22, or an IED Capability Description (ICD) of a first IED 21.

During commissioning of the substation, a laptop computer as an analyser 24 is connected to the SA communication network 20 or inter-bay bus at strategic locations. Suitable or strategic locations include the vicinity of the Ethernet switch of the corresponding bay comprising the IED 21, or the vicinity of an Operator Work Station where most of the network traffic converges.

One type of communication in modem SA systems is based on a publisher - subscriber model using multicast Ethernet frames. Thus, any client, including analyser 24, connected to the network will, if configured accordingly, receive all GOOSE information. Tools have been developed that allow for analysis of the network traffic, i.e. basic Ethernet and related TCP/IP traffic, being exchanged in a SA network. In order to produce a human readable form including relevant context of extracted data, the analysis of the extracted data comprises an interpretation with the help of the description found in the SCD or ICD file. Enhanced information thus generated relates e.g. to the specific data type or format of a piece of data extracted, i.e. whether a particular numerical value is represented in Integer, String or hexadecimal format. The information may also reveal the semantic meaning of the value and indicate e.g. a switch position or any other attribute that has to be known or set for a proper operation of the substation automation system.

Fig.2 shows a possible representation of a single GOOSE frame, i.e. of its decoded content, in textual form. The frame is divided in header information and DataSet information. To decode the meaning of the Data in the DataSet part, the IEC 61850 compliant configuration file (usually a SCD file or any other SCL compatible file) is needed. The Data transferred in the frame are ordered according the dataset Information specified in the SCD file. By way of example, the interpreted lines A and B both refer to a first instance "1" of a logical node of class "XCBR" (circuit breaker) in a logical device instance "C1" with prefix "QA1_1" on IED "AA1D1Q10A1". On line A, "Pos.q" indicates a quality such as good (coded as "000000000") or bad. On line B, "Pos.stVal" indicates a status of the circuit breaker such as open (coded as "01"), close, intermediate or bad.

GOOSE communication between IEDs can be displayed by Network Analyzers that listen to GOOSE frames in a simple list based way. However, since GOOSE frames are sent periodically, the same information might be transmitted several times over the Ethernet. Displaying the values in a textual way in this case makes it hard to identify the packet where the value of the data has changed. Hence, graphically representing the contents of exemplary GOOSE frames transmitted over the communication network appears more user-friendly.

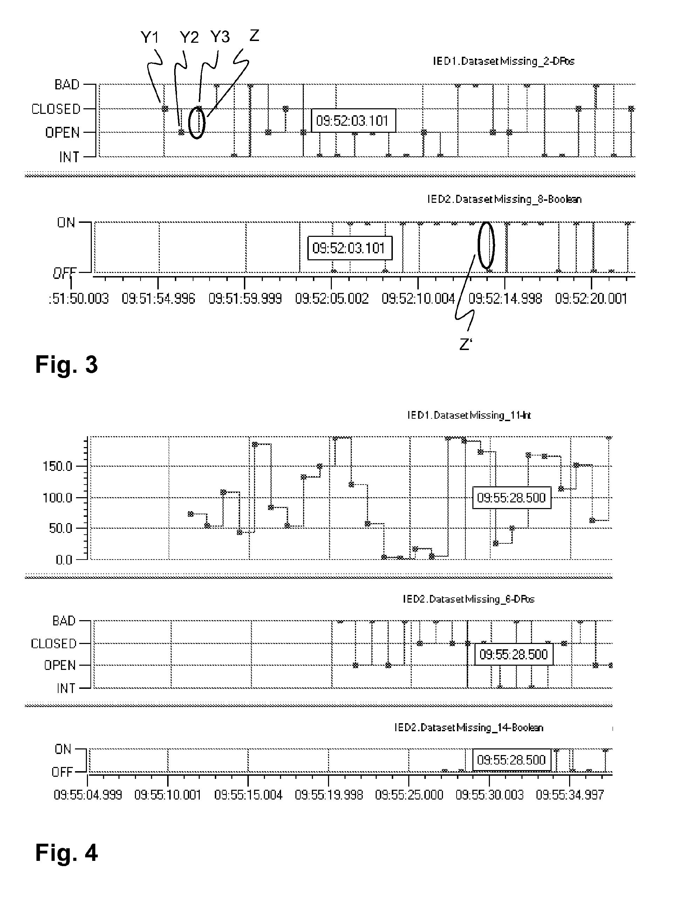

Fig.3 depicts, in the top half, an exemplary graphical representation of a first process quantity Y of an enumerating integer type "DPos", and corresponding to a switch position with the discrete integer values bad, open, closed and intermediate. The values depicted have been extracted from successively received IEC 61850 conforming telegrams. For the sake of clarity, the first three values Y1, Y2, Y3 (corresponding to a sequence close-open-close) of the quantity Y are provided with references, and an exemplary discontinuity indicator Z in the form of a vertical line connecting the level "open" to the value Y3 at the level "closed" is surrounded by an oval. In the bottom half of Fig.3, a second process quantity Y' of Boolean type is depicted. Discontinuity indicators in the form of vertical lines emphasize to the user the changes in the process quantity from "on" to "off" or vice versa. One exemplary discontinuity indicator has been surrounded by an oval and denoted by the reference Z'. The two process quantities Y, Y' originate from two distinct IEDs but are functionally related and thus share a common time axis in Fig.3.

Fig.4 finally is a screen-shot like representation of three distinct process quantities on a time scale spanning approximately 35 seconds. The topmost is of Integer type and represents a process quantity or measurand reported by a first IED, with values oscillating between 0 and 200 VA. The other two process quantities depicted are of the types DPos and Boolean as described in connection with Fig.3, and originate from a second IED.

### LIST OF DESIGNATIONS

- 10: bus bar
- 11: bay
- 20: communication network
- 21: first Intelligent Electronic Device (IED)
- 22: second IED
- 23: SCL file
- 24: analyser
- Y: process quantity
- Z: discontinuity indicator

## Claims

1. A method of analyzing a Substation Automation (SA) system comprising an Intelligent Electronic Device (IED) (21, 22) and an SA communication network (20), wherein the IED (21, 22) transmits messages including process data over the communication network (20), and wherein a first and a second message including a first and a second value (Y1, Y2, Y3) of a particular process quantity (Y), respectively, are captured, **characterized in that** the method comprises
- displaying the first and the second value (Y1, Y2, Y3) in a time resolved graphical manner, and
- displaying, in case the first and the second value (Y1, Y2, Y3) differ, a discontinuity indicator (Z) graphically marking a change in the value of the process quantity (Y).

2. The method according to claim 1, wherein configuration information according to the standard IEC 61850 is provided for the SA system and the IED (21), and wherein the messages include process data according to the standard IEC 61850, comprising
- extracting, from the process data of the intercepted messages and based on the configuration information about the SA system or about the IED, the values of and enhanced information about the process quantities (Y).

3. The method according to claim 1, **characterized in that** it comprises
- displaying values of two distinct process quantities (Y, Y') with respect to a common time axis.

4. The method according to claims 2 and 3, **characterized in that** it comprises
- identifying two functionally related process quantities (Y, Y') based on the enhanced information about the process quantities, and
- displaying concurrently values of the two functionally related process quantities.

5. The method according to claim 1, **characterized in that** it comprises
- writing the first and second value (Y1, Y2, Y3) of the particular process quantity (Y) to a buffer file for subsequent display, or
- updating the display instantly upon the capture of a new message.

6. The method according to one of claims 1 to 3, **characterized in that** it comprises - displaying the first and the second value (Y1, Y2, Y3) in a time resolved graphical manner based on time stamps associated to the values, wherein the time stamp is either comprised in the message content or indicative of the capture time of the message.

7. An analyser for analyzing a Substation Automation (SA) system comprising an Intelligent Electronic Device (IED) (21, 22) and an SA communication network (20), wherein the analyser (24) is adapted to be connected to the communication network (20) and to capture a first and a second message transmitted by the IED (21, 22) over the communication network (20), the messages including a first and a second value (Y1, Y2, Y3) of a particular process quantity (Y), respectively, **characterized in that** the analyser is adapted to
- display the first and the second value (Y1, Y2, Y3) in a time resolved graphical manner, as well as to
- display, in case the first and the second value (Y1, Y2, Y3) differ, a discontinuity indicator (Z) graphically marking a change in the value of the process quantity (Y).
